# EUROPÄISCHE PATENTSCHRIFT

(11) **EP 2 870 039 B1**
(45) Veröffentlichungstag und Bekanntmachung des Hinweises auf die Patenterteilung: **21.09.2016**
(21) Anmeldenummer: 13736861.9
(22) Anmeldetag: 05.07.2013
(51) Int. Cl.: B60T 17/22, G01M 3/26

(54) **VERFAHREN ZUR DETEKTION VON LECKAGEN IN EINER BREMSDRUCK FÜHRENDEN BREMSDRUCKLEITUNG EINES SCHIENENFAHRZEUGS**
METHOD FOR DETECTING LEAKS IN A BRAKE PRESSURE LINE, UNDER BRAKING PRESSURE, OF A RAIL VEHICLE
PROCÉDÉ DE DÉTECTION DE FUITES DANS UNE CONDUITE DE PRESSION DE FREINAGE, GUIDANT UNE PRESSION DE FREINAGE, D'UN VÉHICULE FERROVIAIRE

(30) Priorität: 06.07.2012 DE 102012013521
(43) Veröffentlichungstag der Anmeldung: 13.05.2015
(73) Patentinhaber: KNORR-BREMSE Systeme für Schienenfahrzeuge GmbH, 80809 München (DE)
(72) Erfinder: KULL, Alexander, 81739 München (DE); MINNECKER, Bodo, 80995 München (DE); FEUCHT, Daniel, 80254 Sauerlach (DE)
(86) Internationale Anmeldenummer: PCT/EP2013/064223
(87) Internationale Veröffentlichungsnummer: WO 2014/006174

(56) Entgegenhaltungen:
- EP-A1- 1 634 790
- EP-A2- 1 995 140
- DE-A1-102007 025 835
- DE-A1-102010 048 818
- DE-B- 1 080 588
- ANONYMOUS: 'ROLLING STOCK CONFIGURATIONS AND MAIN ACTIVATED FUNCTIONS FOR EMU/DMU LOCOMOTIVES AND DRIVING COACHES' UIC, [Online] 01 Februar 2009, Seiten 1 - 44, XP055245700 Gefunden im Internet: <URL:http://www.uic.org/com/IMG/pdf/UIC_Lea flet_612-1.pdf> [gefunden am 2016-01-28]

## Beschreibung

Die Erfindung betrifft ein Verfahren zur Identifikation von Leckagen in einer Bremsdruck führenden Bremsdruckleitung einer eine indirekte elektro-pneumatische Bremse aufweisenden Druckluftbremseinrichtung eines Schienenfahrzeugs, gemäß dem Oberbegriff von Anspruch 1.

Ein Verfahren dieser Gattung ist aus der DE 10 2010 048818 A1 bekannt geworden. Dieses Dokument offenbart ebenfalls eine Druckluftbremseinrichtung laut Oberbegriff des Anspruchs 6.

In bekannten elektro-pneumatischen Bremsen wird der Bremsdruck jedes Drehgestells, welches üblicherweise zwei gebremste Achsen und je Achse zwei oder mehr druckluftbetätigte Bremszylinder aufweist, mit einem Drucksensor überwacht, welcher einem als Relaisventil ausgebildeten Einheitsdruckübersetzer (EDU) nachgeordnet ist. Durch diese Anordnung werden jedoch selbst größere Leckagen in den Bremsdruck führenden Bremsdruckleitungen nicht erkannt. Als Ursache hierfür ist die Nachspeiseleistung des Einheitsdruckübersetzers (EDU) zu sehen, welcher bei Leckagen Druckluft in die Bremsdruckleitungen nachspeist, jedoch dadurch eine Identifikation des Bremsdruckverlusts erschwert. Dies ist problematisch, da ein Bremsdruckverlust nicht zuverlässig erkannt werden kann. Dabei muss auch davon ausgegangen werden, dass nicht nur der von der Leckage in der zugeordneten Bremsdruckleitung betroffene Bremszylinder wirkungslos wird, sondern auch die weiteren angekoppelten Bremszylinder des Drehgestells über die Leckage zumindest teilentlüftet werden.

### Aufgabe der Erfindung

Die Aufgabe der Erfindung besteht demgegenüber darin, ein Verfahren zur Verfügung zu stellen, mit dem mit geringstem Aufwand Leckagen in Bremsdruck führenden Bremsdruckleitungen bzw. Bremsdruckschläuchen zuverlässig erkannt werden können.

Diese Aufgabe wird erfindungsgemäß durch die Merkmale der nebengeordneten Patentansprüche 1 und 6 gelöst.

### Offenbarung der Erfindung

Die Erfindung basiert auf dem Gedanken, dass aus Sicherheitsgründen ohnehin durchzuführende Bremsproben, im Rahmen derer ein Zuspannen wenigstens eines Bremsaktuators mittels einer indirekten elektropneumatischen Bremse erfolgt, gleichzeitig dazu genutzt werden, um während dieser Bremsprobe Leckagen in Bremsdruck führenden Leitungen zu detektieren bzw. zu identifizieren.

Erfindungsgemäß wird ein Verfahren zur Identifikation von Leckagen in wenigstens einer Bremsdruck führenden Bremsdruckleitung einer eine indirekte elektro-pneumatische Bremse aufweisenden Druckluftbremseinrichtung eines Schienenfahrzeugs vorgeschlagen, wobei die indirekte elektropneumatische Bremse eine Hauptluftbehälterleitung zur Führung eines Hauptluftbehälterleitungsdrucks und eine die Hauptluftbehälterleitung mit Druckluft versorgende Druckluftquelle aufweist und vom Hauptluftleitungsdruck in einer Hauptluftleitung gesteuert wird, wobei die den Bremsdruck führende, wenigstens eine Bremsdruckleitung zwischen einer den Bremsdruck abhängig vom Hauptluftleitungsdruck in der Hauptluftleitung aussteuernden Ventileinrichtung und wenigstens einem Bremsaktuators geführt ist, und wobei das Verfahren eine im Stillstand des Schienenfahrzeugs durchgeführte Bremsprobe mit wenigstens folgenden Schritten umfasst:
a) Prüfen, ob bei unterbundener Druckluftnachlieferung von der Druckluftquelle in die Hauptluftbehälterleitung der Hauptluftbehälterleitungsdruck einen vorgegebenen Grenzwert überschreitet, und falls dies der Fall ist,
b) Steuern des Hauptluftleitungsdrucks in der Hauptluftleitung zum Zuspannen des wenigstens einen Bremsaktuators, wobei im Rahmen der Bremsprobe wenigstens die folgenden weiteren Schritte durchgeführt werden:
c) Überwachen des Hauptluftbehälterleitungsdrucks dahingehend, ob c1) der Wert des sich nach dem Zuspannen des wenigstens einen Bremsaktuators einstellenden Hauptluftbehälterleitungsdrucks mehr als eine vorgegebene Differenz von einem vorgegebenen plausiblen Wert für den Hauptluftbehälterleitungsdruck abweicht, und/oder c2) der Druckgradient des Hauptluftbehälterleitungsdrucks in dem Zeitraum zwischen dem Beginn und dem Ende des Zuspannens des wenigstens einen Bremsaktuators einen vorgegebenen Druckgradienten übersteigt, und
d) falls c1 und/oder c2 zutrifft, Erzeugen einer Fehlermeldung, dass eine Leckage in der wenigstens einen Bremsdruckleitung vorliegt.
   Weiterhin wird eine Druckluftbremseinrichtung eines Schienenfahrzeugs beinhaltend eine solche indirekte elektro-pneumatische Bremse zur Durchführung dieses Verfahrens vorgeschlagen, mit
a) wenigstens einer Einrichtung zum Erfassen des Hauptluftbehälterleitungsdrucks,
b) einer Auswerteeinrichtung, welche derart ausgebildet ist, dass sie im Rahmen einer im Stillstand des Schienenfahrzeugs durchgeführten Bremsprobe wenigstens die Schritte c) und d) des erfindungsgemäßen Verfahrens durchführt,
c) wenigstens einer Anzeige zum Anzeigen der Fehlermeldung oder einem Diagnosespeicher zum Abspeichern der Fehlermeldung.

Hintergrund dabei ist, dass bei einer Leckage in einer Bremsdruck führenden Bremsdruckleitung neben dem Bremsdruck gleichzeitig auch der Hauptluftbehälterleitungsdruck signifikant absinkt, weil der Bremsdruck von diesem abgeleitet wird bzw. weil beim Zuspannen der indirekten elektropneumatischen Bremse eine Druckluftverbindung zwischen den Bremsdruckleitungen und der Hauptluftbehälterleitung geschaffen wird.

Da die Bremsdruckleitungen in den Drehgestellen in der Regel als flexible, Umwelteinflüssen ausgesetzte Bremsdruckschläuche ausgeführt sind, welche zwischen den Steuerventilen nachgeordneten Anschlüssen am Drehgestell und den zugeordneten Bremszylindern gezogen sind, sind am ehesten Leckagen in solchen Bremsdruckschläuchen zu erwarten.

Dabei wird insbesondere eine Bremsprobe herangezogen, bei welcher eine indirekte elektro-pneumatischen Bremse aktiviert bzw. die Bremszylinder zugespannt werden, weil die indirekte Bremse in der Regel für Schnellbremsungen unter hohem Druckluftverbrauch eingesetzt wird, wobei sich Leckagen in Bremsdruckleitungen besonders signifikant auswirken.

Um das Messergebnis nicht zu verfälschen, ist dabei wesentlich, dass insbesondere im Rahmen der Bremsprobe eine Nachspeisung von Druckluft durch die Druckluftquelle unterbunden wird und dass eine Überwachung des Hauptluftbehälterleitungsdrucks im Hinblick auf eine Detektion einer Leckage in einer Bremsdruckleitung erst dann erfolgt, wenn dieser einen gewissen Grenzwert überschritten hat. Unter solchen Bedingungen ist gewährleistet, dass zum einen ein ausreichender Hauptluftbehälterleitungsdruck vorliegt, um signifikante Abweichungen hinsichtlich Druckgradient bzw. Druckdifferenz von erwarteten Werten und damit den Fehler "Leckage in Bremsdruckleitung" mit hinreichender Sicherheit feststellen zu können.

Gegenüber Lösungen, in denen in jede Bremsdruck führende Bremsdruckleitung ein eigener Drucksensor eingebaut wird, was je Drehgestellt vier solcher Drucksensoren samt Verkabelung bedeuten würde, bringt die Erfindung den Vorteil der Nutzung eines meist bereits vorhandenen Drucksensors in der Hauptluftbehälterleitung HB.

Durch die in den Unteransprüchen aufgeführten Maßnahmen sind vorteilhafte Weiterbildungen und Verbesserungen der in den nebengeordneten Ansprüchen 1 und 6 angegebenen Erfindung möglich.

Besonders bevorzugt ist vorgesehen, dass die Bremsprobe manuell, benutzergeführt oder automatisch durchgeführt und während der Bremsprobe der Hauptluftleitungsdruck in der Hauptluftleitung HL wenigstens zeitweise zum Zuspannen des wenigstens einen Bremsaktuators gesteuert wird.

Generell wird, bevor ein Zug aus Schienenfahrzeugen oder ein Schienenfahrzeug einen Anfangsbahnhof verlässt, bei aufgerüstetem Schienenfahrzeug und noch im Stillstand eine Bremsprobe vorgenommen. Die Bremsprobe wird wiederholt, so oft der Führerstand im Triebfahrzeug gewechselt oder der Zug aus Schienenfahrzeugen ergänzt oder getrennt wird. Die Aufgabe der Bremsprobe wird dabei in der Regel von Bremsberechtigten durchgeführt, welche über eine besondere Ausbildung verfügen.

Bei einer manuellen Bremsprobe werden die erforderlichen Arbeitsschritte von Hand eingeleitet und augenscheinlich kontrolliert. Bei der benutzergeführten Bremsprobe werden die in einer Führerraumanzeige aufgeführten Arbeitsschritte von Hand eingeleitet und deren Ergebnisse augenscheinlichen Kontrolle angezeigt. Bei einer automatischen Bremsprobe werden die Arbeitsschritte und die Kontrolle der Ergebnisse automatisch durchgeführt.

Weiterhin wird zwischen vollen und vereinfachten Bremsproben unterschieden. Bei der vollen Bremsprobe ist der Zustand der Bremsen aller Fahrzeuge festzustellen. Bei der vereinfachten Bremsprobe ist festzustellen, ob die Durchgängigkeit der Hauptluftleitung, der Hauptluftbehälterleitung bzw. der elektrischen Bremsleitungen bis zum letzten Schienenfahrzeug des Zuges gegeben ist und die Bremsen vom führenden Fahrzeug aus zugespannt und gelöst werden können. Weiterhin wird bei einer Führerraumbremsprobe oder Wendebremsprobe die Funktion des Führerbremsventils im führenden Fahrzeug geprüft.

Die im Verlauf der Bremsprobe festgestellten Mängel und Schäden sind zu erfassen durch Bezettelung oder eine geeignete Dokumentation oder durch Eingabe in ein Diagnosesystem.

Für die Erfindung kann jede der oben genannten Bremsproben herangezogen werden, um eine Leckage in Bremsdruck führenden Bremsdruckleitungen unter Beobachtung des Hauptluftbehälterleitungsdrucks zu detektieren bzw. festzustellen. Besonders bevorzugt ist die Bremsprobe eine Bremsprobe gemäß der Norm UIC 612-1, Kapitel 4.1.3.1.

Während der Bremsprobe wird bevorzugt eine elektro-pneumatische Steuerung des Hauptluftleitungsdrucks in der Hauptluftleitung HL mittels einer ein Lösemagnetventil und ein Bremsmagnetventil beinhaltenden Steuerventileinrichtung unterbunden.

Die Fehlermeldung "Leckage in einer Bremsdruckleitung" wird bevorzugt in einem Diagnosespeicher abgespeichert, um sie bedarfsweise auszulesen.

Die Einrichtung zum Erfassen des Hauptluftbehälterleitungsdrucks beinhaltet beispielsweise wenigstens einen in der Hauptluftbehälterleitung angeordneten Drucksensor und die Auswerteeinrichtung ein elektronisches Steuergerät. Weiterhin wird die Druckluftquelle durch wenigstens einen Kompressor oder einen Druckluftvorratsbehälter gebildet wird.

Besonders bevorzugt ist auch vorgesehen, dass die indirekte elektropneumatische Bremse weiterhin eine elektro-pneumatische Steuerung des Hauptluftleitungsdrucks in der Hauptluftleitung HL aufweist, welche durch eine ein Lösemagnetventil und ein Bremsmagnetventil beinhaltenden Steuerventileinrichtung durchgeführt wird, wobei mittels des durch die elektropneumatischen Steuereinrichtung gesteuerten Hauptluftleitungsdrucks ein Steuereingang eines Einheitsdruckübersetzers (EDU) oder Relaisventils gesteuert wird, welches abhängig von dem gesteuerten Hauptluftleitungsdruck den Bremsdruck über die Bremsdruckleitung in den wenigstens einen Bremsaktuator aussteuert.

Ein solcher Bremsaktuator wird beispielsweise durch einen druckluftbetätigten Bremszylinder gebildet, wobei beispielsweise je Achse eines zweiachsigen Drehgestells zwei solcher Bremszylinder vorgesehen sind. Dabei wird eine hinsichtlich Bremsdruckverlust durch Leckage zu überwachende Bremsdruckleitung beispielsweise durch einen Bremsdruckschlauch zur Versorgung wenigstens eines Bremsaktuators einer Achse eines zwei Achsen aufweisenden Drehgestells mit Bremsdruck (C) gebildet wird.

Gemäß einer Weiterbildung kann die Druckluftbremseinrichtung neben einer indirekten elektro-pneumatischen Bremse weiterhin auch eine direkte elektropneumatische Bremse aufweisen, mit einem elektro-pneumatischen Druckregler, welcher mit Hilfe eines Bremsmagnetventils und eines Lösemagnetventils aus dem Hauptluftbehälterleitungsdruck einen Vorsteuerdruck für einen weiteren Steuereingang des Einheitsdruckübersetzers (EDU) oder Relaisventils erzeugt, welches abhängig von dem Vorsteuerdruck den Bremsdruck (C) in den wenigstens einen Bremsaktuator aussteuert. Somit teilen sich die indirekte elektro-pneumatische Bremse und die direkte elektropneumatische Bremse den Einheitsdruckübersetzer (EDU).

Wie üblich, ist in diesem Fall die indirekte elektro-pneumatische Bremse für Schnellbremsungen und die direkte elektro-pneumatische Bremse für Betriebsbremsungen vorgesehen. Weiterhin kann die indirekte elektropneumatische Bremse als Rückfallebene bei Ausfall der direkt elektropneumatischen Bremse dienen.

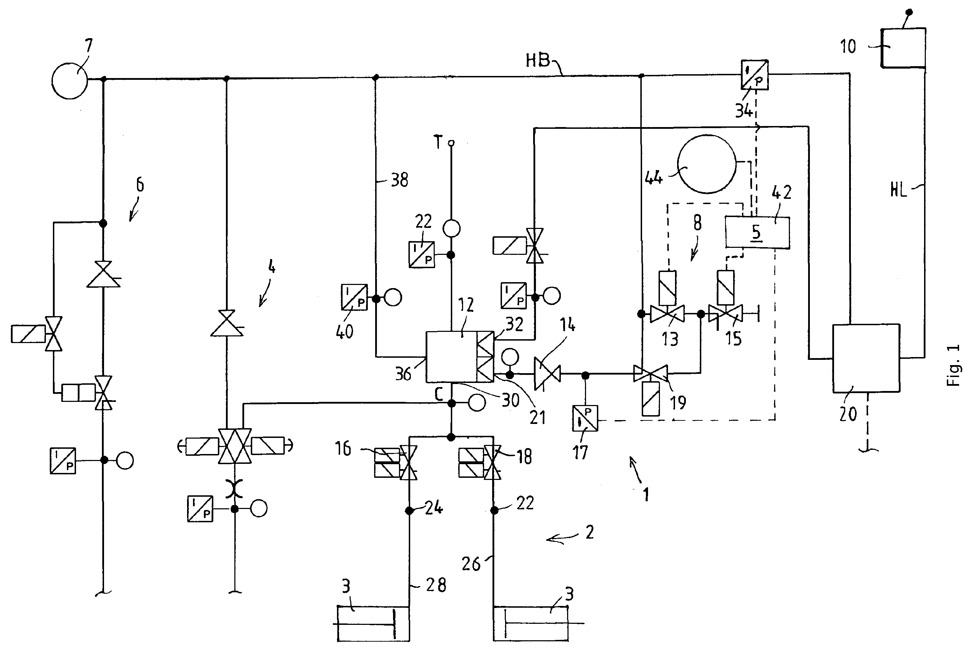

Weitere die Erfindung verbessernde Maßnahmen werden nachstehend gemeinsam mit der Beschreibung von bevorzugten Ausführungsbeispielen der Erfindung anhand der Zeichnung näher dargestellt.

### Zeichnung

Nachstehend ist ein Ausführungsbeispiel der Erfindung in der Zeichnung dargestellt und in der nachfolgenden Beschreibung näher erläutert. In der Zeichnung zeigt die einzige Figur ein Schaltschema einer elektropneumatischen Druckluftbremseinrichtung gemäß der Erfindung in einer bevorzugten Ausführungsform.

### Beschreibung des Ausführungsbeispiels

In der Figur ist ein Schaltschema eines Teils einer bevorzugten Ausführungsform eines elektro-pneumatischen Druckluftbremssystems 1 eines Schienenfahrzeugs oder eines aus mehreren Schienenfahrzeugen gebildeten Zugs gezeigt, beinhaltend eine direkt wirkende elektro-pneumatische, mikroprozessorgesteuerte Bremseinrichtung ("direkte Bremse") und eine indirekt wirkende Bremse ("indirekte Bremse").

Ein einzelnes Schienenfahrzeug hat beispielsweise zwei Drehgestelle, wobei ein Drehgestell 2 beispielsweise zwei gebremste Achsen mit jeweils zwei pneumatisch betätigten Bremszylindern 3 aufweist. In der Figur ist jeweils nur ein Bremszylinder 3 dargestellt. Jedes Drehgestell 2 wird beispielsweise durch ein hier nicht explizit gezeigtes Kompaktsteuermodul CCM (Compact Control Module) separat gesteuert, so dass für jedes Drehgestell 2 ein individueller Bremsdruck C für beispielsweise vier Bremszylinder gebildet werden kann. Hierzu ist in jedem Kompaktsteuermodul CCM ein elektronisches Bremssteuergerät 5 integriert. Übergeordnet erfolgt die Steuerung des elektro-pneumatischen Druckluftbremssystems durch ein Bremsmanagement, welches alle Bremsfunktionen des Schienenfahrzeugs ausführt, überwacht und diagnostiziert. Das Bremsmanagement hat die Aufgabe, sämtliche zur Verzögerung des Fahrzeuges nötigen Systeme zu steuern und zu überwachen. Dies sind im einzelnen priorisierte elektrodynamische Bremsen, welche an den Triebradsätzen wirksam sind und zur Betriebsbremsung vorrangig eingesetzt werden, die direkte Bremse an Laufachsen, welche bei Betriebsbremsungen zum Ergänzen der benötigten Bremskraft verwendet wird, die indirekte Bremse als Schnellbremse oder als unterlegte Sicherheitsebene bei Ausfall der direkten Bremse, die Parkbremse und die Magnetschienenbremse. Die Steuerventilanordnung 4 der hier nicht interessierenden Parkbremse und die Steuerventilanordnung 6 der hier nicht interessierenden Magnetschienenbremse sind in der Figur der Vollständigkeit halber dargestellt.

Durch den Zug ist eine Hauptluftbehälterleitung HB gezogen, welche von einer Druckluftquelle, beispielsweise einem Kompressor 7 mit Druckluft unter Hauptluftbehälterleitungsdruck versorgt wird. Die Hauptluftbehälterleitung HB versorgt die direkte Bremse wie auch die indirekte Bremse mit Druckluft. Weiterhin ist eine von einem Führerbremsventil 10 gesteuerte Hauptluftleitung HL vorhanden, welche zur Steuerung der indirekten Bremse dient.

Die direkte Bremse ist eine mikroprozessorgesteuertes, elektropneumatische Druckluftbremse als Betriebsbremse mit einem elektropneumatischen Druckregler 8, in dem die von einer Steuerelektronik über Signalleitungen vorgegebene elektrische Befehle in pneumatische Signale, insbesondere in einen Vorsteuerdruck für ein nachgeschaltetes Relaisventil oder einen Einheitsdruckumsetzer 12 umgesetzt werden. Der elektropneumatische Druckregler 8 wird durch ein Bremsmagnetventil 13 und ein Lösemagnetventil 15 sowie durch einen Drucksensor 17 gebildet. Das Bremsmagnetventil 13 und das Lösemagnetventil 15 übernehmen die Funktion des stufenlosen und schnellen Druckaufbaus bzw. Druckabbaus. Der Drucksensor 17 dient zur Messung des eingeregelten Vorsteuerdrucks. Der elektro-pneumatische EP-Druckregler 8 bildet zusammen mit dem elektronischen Bremssteuergerät 5 einen Druckregelkreis. Der eingeregelte Vorsteuerdruck wird über ein bei einer Betriebsbremsung erregt gehaltenes Schnellbremsmagnetventil 19 und ein Druckbegrenzungsventil 14 einem Steuereingang 21 des Einheitsdruckübersetzer 12 zugeleitet, welcher bevorzugt durch ein Relaisventil gebildet wird. Das dem elektro-pneumatischen Druckregler 8 und dem Einheitsdruckübersetzer 12 zwischengeschaltete Druckbegrenzungsventil 14 begrenzt den Vorsteuerdruck der direkten Bremse auf einen vorgebbaren maximalen Vorsteuerdruck der direkten Bremse.

An einem Lastanschluss T des Einheitsdruckübersetzers 12 liegt ständig der Mittelwert der Lastdrücke an, der dem Einheitsdruckübersetzer 12 zugeführt wird. Dieser Lastdruck T wird mit einem Drucksensor 22 gemessen und von dem Bremssteuergerät 5 verarbeitet.

Der an dem einen Steuereingang 21 des Einheitsdruckübersetzers 12 anliegende Vorsteuerdruck der direkten Bremse und der Lastdruck T dienen als Steuergrößen für den Einheitsdruckübersetzer 12, mit dessen Hilfe der von einem Druckluftbehälter bzw. von der Hauptluftbehälterleitung HB kommende Versorgungsdruck am Reservoiranschluss 36 des Einheitsdruckübersetzers 12 in einen lastkorrigierten und leistungsstärkeren Bremszylinderdruck C am Ausgangsanschluss 30 umgesetzt wird. Der Bremsdruck C wird dann den beiden Bremszylindern 3 einer Achse jeweils über Gleitschutzventile 16, 18 zugeführt. Zwischen den Gleitschutzventilen 16, 18 nachgeordneten Anschlüssen 22, 24 und dem jeweiligen Bremszylinder 3 sind im Drehgestell flexible Bremsdruckschläuche 26, 28 geführt. Die Gleitschutzregelung an einer Achse eines Drehgestells erfolgt dann über jeweils ein dem Einheitsdruckübersetzer 12 nachgeordnetes Gleitschutzventil 16 ,18 pro Radsatz. Die Schnellbremse bzw. Notbremse wird durch das hartverdrahtete Schnellbremsmagnetventil 19 unter Umgehung des mikroprozessorgesteuerten elektro-pneumatischen Druckreglers 8 realisiert.

Bei der Betriebsbremsung wird neben der priorisierten elektrodynamischen Bremse ausschließlich die direkte Bremse eingesetzt. Bei kleinen Geschwindigkeiten übernimmt die Reibungsbremse ruckfrei die gesamte Bremskraft bis zum Stillstand und steuert dann selbsttätig die Festhaltestufe ein, um ein Rückrollen des Fahrzeugs zu verhindern. Die direkte Bremse wird zu folgenden Aufgaben herangezogen:
- Betriebsbremsung (lastabhängig): Ergänzung der elektrodynamischen Bremse durch die Reibungsbremse.
- Festhaltebremse (lastabhängig): Bei Fahrzeugstillstand, verhindert Rollen des Fahrzeugs,
- Haltebremse (lastabhängig): Bei kleinen Geschwindigkeiten Bremskraftübernahme in den Trieb- und Laufdrehgestellen
- Notbremse (lastabhängig): Maximale Verzögerung im Gefahrenfall, mit Gleitschutz und Lastkorrektur über Schnellbrems- oder Notbremsventile auf den Kompaktsteuermodulen CCM; redundant stellt auch die direkte Bremse über den elektro-pneumatischen Druckregler 8 den entsprechenden Bremsdruck C ein.

Die indirekte Bremse wird bei Normalbetrieb zur Schnellbremsung eingesetzt, welche rein pneumatisch über die Hauptluftleitung HL ausgeführt wird. Die indirekte Bremse dient auch als Rückfallebene bei Ausfall der direkten Bremse und beim Abschleppen durch UIC-Fahrzeuge, und gewährleistet folgende Funktionen:
- Kuppelbarkeit mit UIC-Fahrzeugen, auch mit Einleitungssystemen,
   unter Beibehaltung der Bremsfähigkeit,
- Redundante Rückfallebene der Not-/Schnellbremse,
- Redundante Bremsmöglichkeit bei Ausfall des Bremsmanagements zur Weiterfahrt und zum Räumen der Strecke (z.B. Probleme im Bordnetz).

Bei der indirekten Bremse wird der Hauptluftleitungsdruck in der Hauptluftleitung HL über eine Steuerventileinrichtung 20, welche hier nicht explizit gezeigte Lösemagnetventile und Bremsmagnetventile beinhaltet, beeinflusst. Die elektrischen Steuersignale für die Steuerventileinrichtung 20 werden im führenden Fahrzeug parallel zum Hauptluftleitungsdruck in der Hauptluftleitung HL erzeugt und über elektrische Leitungen in alle Schienenfahrzeuge des Zugs übertragen. Hierdurch wird eine zeitgleiche Ansteuerung der Steuerventileinrichtungen 20 der indirekten Bremsen aller Schienenfahrzeuge des Zugverbands erreicht.

In jedem Führerstand hat der Fahrer das Führerbremsventil 10 zum Betätigen der indirekten Bremse zur Verfügung. Über das Führerbremsventil 10 kann der Fahrer die Hauptluftleitung HL stufenlos entlüften und damit den Druck von 5 bar (Lösedruck) absenken. Bei Absenkung um 1,5 bar ist die höchste Bremsstufe erreicht. Eine weitere Druckabsenkung hat keinen weiteren Effekt. Bei einer Schnell- oder Notbremsung wird zur Verkürzung der Brems- und Ansprechzeiten die Hauptluftleitung HL gemäß UIC auf 0 bar entlüftet.

Der Druck in der Hauptluftleitung HL wird im Normalbetrieb mittels eines hier nicht gezeugten Druckminderventils und des Führerbremsventils 10 auf 5 bar gehalten. Der Druck in der Hauptluftleitung HL kann auch durch Betätigen eines hier nicht gezeigten Notschalttaster im Führerstand und durch Entregen von SIFA-Ventilen mittels Öffnen einer Notbremsschleife abgesenkt und damit die Schnell- oder Notbremsung ausgelöst werden.

Die Druckabsenkung in der Hauptluftleitung HL wird in der Steuerventileinrichtung 20, welche ein Lösemagnetventil und ein Bremsmagnetventil beinhaltet, in einen weiteren Vorsteuerdruck für einen weiteren Steuereingang 32 des Einheitsdruckumsetzer 12 umgesetzt, welcher dann mittels des Einheitsdruckumsetzers 12 lastkorrigiert und leistungsverstärkt wird. Die Bremsung kann somit analog und lastabhängig über den kompletten Anforderungsbereich durchgeführt werden.

In der Steuerventileinrichtung 20 wird daher der Hauptluftleitungsdruck HL (Bremse lösen = 5 bar, Anlegen = Druckabsenkung um ca. 0,4 bar, Maximale Bremskraft = Druckabsenkung um 1,5 bar) in einen Vorsteuerdruck für den weiteren Steuereingang 32 des nachgeschalteten Einheitsdruckumsetzer 12 umgesetzt.

Aus Sicherheitsgründen im Stillstand des Schienenfahrzeugs bzw. des Schienenfahrzeugzuges ohnehin durchzuführende Bremsproben, im Rahmen derer ein Zuspannen der Bremszylinder 3 mittels der indirekten Bremse erfolgt, wird gleichzeitig dazu genutzt, um während dieser Bremsprobe Leckagen in Bremsdruck führenden Leitungen zu detektieren bzw. zu identifizieren, insbesondere Leckagen in den Bremsdruckschläuchen 26, 28. Daher wird hier ein Verfahren zur Identifikation von Leckagen in Bremsdruck führenden Bremsdruckleitungen 26, 28 vorgeschlagen, wobei das Verfahren eine im Stillstand des Schienenfahrzeugs durchgeführte Bremsprobe der indirekten Bremse nutzt.

Bei der Bremsprobe, welche bevorzugt eine automatische oder halbautomatische Bremsprobe gemäß UIC 612-1 Kapitel 4.1.3.1. ist, wird zunächst geprüft, ob bei unterbundener Druckluftnachlieferung vom Kompressor 7 in die Hauptluftbehälterleitung HB der hier bevorzugt direkt in der Hauptluftbehälterleitung HB von einem Drucksensor 34 gemessene Hauptluftbehälterleitungsdruck einen vorgegebenen Grenzwert überschreitet, beispielsweise 7,8 10⁵ Pa (7,8 bar). Da der Hauptluftbehälterleitungsdruck ebenfalls in weiteren Druckleitungen oder Anschlüssen ansteht, wie beispielsweise in der von der Hauptluftbehälterleitung HB zu dem Reservoiranschluss 36 des Einheitsdruckumsetzers 12 gezogenen Druckleitung 38 könnte er auch von einem dort ohnehin vorhandenen Drucksensor 40 gemessen werden.

Falls der Hauptluftbehälterleitungsdruck den vorgegebenen Grenzwert überschreitet, wird gemäß der Bremsprobe der Hauptluftleitungsdruck in der Hauptluftleitung HL zum Zuspannen der indirekten Bremse bzw. der Bremszylinder gesteuert. Das Zuspannen der Bremszylinder 3 ist stets Bestandteil einer Bremsprobe.

Über die im Rahmen der Bremsprobe durchgeführten weiteren Maßnahmen hinaus oder zusätzlich zu den im Rahmen der Bremsprobe durchgeführten Maßnahmen sieht das Verfahren vor, dass der Hauptluftbehälterleitungsdruck vom Drucksensor in der Hauptluftbehälterleitung HB dahingehend überwacht wird, ob der Wert des sich nach dem Zuspannen der Bremszylinder 3 einstellenden Hauptluftbehälterleitungsdrucks mehr als eine vorgegebene Differenz von einem vorgegebenen plausiblen oder erwarteten Wert für den Hauptluftbehälterleitungsdruck abweicht. Alternativ oder zusätzlich kann der Hauptluftbehälterleitung HB dahingehend überwacht werden, ob der Druckgradient des Hauptluftbehälterleitungsdrucks in dem Zeitraum zwischen dem Beginn und dem Ende des Zuspannens der Bremszylinder 3 bzw. der indirekten Bremse einen vorgegebenen Druckgradienten übersteigt.

Falls der eine und/oder der andere Fall zutrifft, deutet dies auf einen ungewöhnlichen Druckabfall des Hauptluftbehälterleitungsdrucks hin. Denn dies impliziert nach bereits erfolgter Überprüfung, dass der Hauptluftbehälterleitungsdruck vor dem Zuspannen der indirekten Bremse einen vorgegebenen Grenzwert überschritten hat, dass der ungewöhnliche Druckabfall bzw. Druckgradient auf eine Leckage in einer der Bremsdruckleitungen zurückzuführen ist. Der vom Drucksensor 34 aufgenommene Hauptluftbehälterleitungsdruck wird in einer Auswerteinrichtung 42 hinsichtlich der oben genannten Kriterien ausgewertet und bei einem Eintreten eines oder beider Fälle eine Fehlermeldung erzeugt, welche auf eine Leckage in einer oder in mehreren Bremsdruckschläuchen 26, 28 hinweist. Da die Bremsdruckschläuche 26, 28, welche zwischen den Gleitschutzventilen 16, 18 nachgeordneten Anschlüssen 22, 24 am Drehgestell und den zugeordneten Bremszylindern 3 gezogen sind, starken Umwelteinflüssen ausgesetzt sind, sind am ehesten Leckagen in diesen Bremsdruckschläuchen 26, 28 zu erwarten. Die Auswerteeinrichtung 42 bzw. deren Softwareroutine ist bevorzugt in das Bremssteuergerät 5 der direkten Bremse integriert. Die in der Auswerteeinrichtung erzeugte Fehlermeldung wird dann an einer Anzeige 44 im Führerstand angezeigt und/oder einem Diagnosespeicher zum Auslesen abgespeichert.

### Bezuqszahlenliste

- 1: Bremssystem
- 2: Drehgestell
- 3: Bremszylinder
- 4: Steuerventilanordnung
- 5: Bremssteuergerät
- 6: Steuerventilanordnung
- 7: Kompressor
- 8: Druckregler
- 10: Führerbremsventil
- 12: Einheitsdruckumsetzer
- 13: Bremsmagnetventil
- 14: Druckbegrenzungsventil
- 15: Lösemagnetventil
- 16: Gleitschutzventil
- 17: Drucksensor
- 18: Gleitschutzventil
- 19: Schnellbremsmagnetventil
- 20: Steuerventileinrichtung
- 21: Steuereingang
- 22: Anschluss
- 24: Anschluss
- 26: Bremsdruckschlauch
- 28: Bremsdruckschlauch
- 30: Ausgangsanschluss
- 32: Steuereingang
- 34: Drucksensor
- 36: Reservoiranschluss
- 38: Druckleitung
- 40: Drucksensor
- 42: Auswerteeinrichtung
- 44: Anzeige

## Patentansprüche

1. Verfahren zur Detektion von Leckagen in wenigstens einer Bremsdruck (C) führenden Bremsdruckleitung (26, 28) einer eine indirekte elektropneumatische Bremse aufweisenden Druckluftbremseinrichtung (1) eines Schienenfahrzeugs, wobei die indirekte elektro-pneumatische Bremse eine Hauptluftbehälterleitung (HB) zur Führung eines Hauptluftbehälterleitungsdrucks und eine die Hauptluftbehälterleitung (HB) mit Druckluft versorgende Druckluftquelle (7) aufweist und vom Hauptluftleitungsdruck in einer Hauptluftleitung (HL) gesteuert wird, wobei die wenigstens eine den Bremsdruck (C) führende Bremsdruckleitung (26, 28) zwischen einer den Bremsdruck (C) abhängig vom Hauptluftleitungsdruck in der Hauptluftleitung (HL) aussteuernden Ventileinrichtung (12) und wenigstens einem Bremsaktuator (3) geführt ist, und wobei das Verfahren eine im Stillstand des Schienenfahrzeugs durchgeführte Bremsprobe mit wenigstens folgenden Schritten umfasst:
a) Prüfen, ob bei unterbundener Druckluftnachlieferung von der Druckluftquelle (7) in die Hauptluftbehälterleitung (HB) der Hauptluftbehälterleitungsdruck einen vorgegebenen Grenzwert überschreitet, und falls dies der Fall ist,
b) Steuern des Hauptluftleitungsdrucks in der Hauptluftleitung (HL) zum Zuspannen des wenigstens einen Bremsaktuators (3),
**dadurch gekennzeichnet, dass** im Rahmen der Bremsprobe wenigstens die folgenden weiteren Schritte durchgeführt werden:
c) Überwachen des Hauptluftbehälterleitungsdrucks dahingehend, ob
c1) der Wert des sich nach dem Zuspannen des wenigstens einen Bremsaktuators (3) einstellenden Hauptluftbehälterleitungsdrucks mehr als eine vorgegebene Differenz von einem vorgegebenen plausiblen Wert für den Hauptluftbehälterleitungsdruck abweicht, und/oder
c2) der Druckgradient des Hauptluftbehälterleitungsdrucks in dem Zeitraum zwischen dem Beginn und dem Ende des Zuspannens des wenigstens einen Bremsaktuators (3) einen vorgegebenen Druckgradienten übersteigt, und
d) falls c1) und/oder c2) zutrifft, Erzeugen einer Fehlermeldung, dass eine Leckage in der wenigstens einen Bremsdruckleitung (26, 28) vorliegt.

2. Verfahren nach Anspruch 1, **dadurch gekennzeichnet, dass** die Bremsprobe manuell, benutzergeführt oder automatisch durchgeführt und während der Bremsprobe der Hauptluftleitungsdruck in der Hauptluftleitung (HL) wenigstens zeitweise zum Zuspannen des wenigstens einen Bremsaktuators (3) gesteuert wird.

3. Verfahren nach einem der vorhergehenden Ansprüche, **dadurch gekennzeichnet, dass** während der Bremsprobe eine elektro-pneumatische Steuerung des Hauptluftleitungsdrucks in der Hauptluftleitung (HL) mittels einer ein Lösemagnetventil und ein Bremsmagnetventil beinhaltenden Steuerventileinrichtung (20) unterbunden wird.

4. Verfahren nach einem der vorhergehenden Ansprüche, **dadurch gekennzeichnet, dass** die Bremsprobe eine Bremsprobe gemäß der Norm UIC 612-1, Kapitel 4.1.3.1 ist.

5. Verfahren nach einem der vorhergehenden Ansprüche, **dadurch gekennzeichnet, dass** die Fehlermeldung an einer Anzeige (44) angezeigt und/oder in einem Diagnosespeicher abgespeichert wird.

6. Druckluftbremseinrichtung (1) eines Schienenfahrzeugs beinhaltend eine indirekte elektro-pneumatische Bremse nach einem der vorhergehenden Ansprüche zur Durchführung des Verfahrens nach einem der vorhergehenden Ansprüche, **gekennzeichnet durch**
a) wenigstens eine Einrichtung (34) zum Erfassen des Hauptluftbehälterleitungsdrucks,
b) eine Auswerteeinrichtung (42) , welche derart ausgebildet ist, dass sie im Rahmen einer im Stillstand des Schienenfahrzeugs durchgeführten Bremsprobe wenigstens die Schritte c) und d) von Anspruch 1 durchführt,
c) wenigstens eine Anzeige (44) zum Anzeigen der Fehlermeldung oder einen Diagnosespeicher zum Abspeichern der Fehlermeldung.

7. Druckluftbremseinrichtung nach Anspruch 6, **dadurch gekennzeichnet, dass** die Einrichtung zum Erfassen des Hauptluftbehälterleitungsdrucks wenigstens einen in der Hauptluftbehälterleitung (HB) angeordneten Drucksensor (34) beinhaltet.

8. Druckluftbremseinrichtung nach Anspruch 6 oder 7, **dadurch gekennzeichnet, dass** die Auswerteeinrichtung (42) durch ein elektronisches Steuergerät gebildet wird.

9. Druckluftbremseinrichtung nach einem der Ansprüche 6 bis 8, **dadurch gekennzeichnet, dass** die Druckluftquelle (7) durch wenigstens einen Kompressor oder einen Druckluftvorratsbehälter gebildet wird.

10. Druckluftbremseinrichtung nach einem der Ansprüche 6 bis 9, **dadurch gekennzeichnet, dass** die indirekte elektro-pneumatische Bremse weiterhin eine elektro-pneumatische Steuerung des Hauptluftleitungsdrucks in der Hauptluftleitung (HL) aufweist, welche durch eine ein Lösemagnetventil und ein Bremsmagnetventil beinhaltende Steuerventileinrichtung (20) durchgeführt wird, wobei mittels des durch die elektro-pneumatische Steuerventileinrichtung (20) gesteuerten Hauptluftleitungsdrucks ein Steuereingang (21) eines Relaisventils (32) gesteuert wird, welches abhängig von dem gesteuerten Hauptluftleitungsdruck den Bremsdruck (C) über die wenigstens eine Bremsdruckleitung (26, 28) in den wenigstens einen Bremsaktuator (3) aussteuert.

11. Druckluftbremseinrichtung nach Anspruch 10, **dadurch gekennzeichnet, dass** die wenigstens eine Bremsdruckleitung (26, 28) durch einen Bremsdruckschlauch zur Versorgung des wenigstens einen Bremsaktuators (3) einer Achse eines zwei Achsen aufweisenden Drehgestells mit Bremsdruck (C) gebildet wird.

12. Druckluftbremseinrichtung nach einem der Ansprüche 6 bis 9, **dadurch gekennzeichnet, dass** sie weiterhin eine direkte elektro-pneumatische Bremse aufweist, mit einem elektro-pneumatischen Druckregler (8), welcher mit Hilfe eines Bremsmagnetventils (13) und eines Lösemagnetventils (15) aus dem Hauptluftbehälterleitungsdruck einen Vorsteuerdruck für einen weiteren Steuereingang (21) des Relaisventils (32) erzeugt, welches abhängig von dem Vorsteuerdruck den Bremsdruck (C) in den wenigstens einen Bremsaktuator (3) aussteuert.

13. Druckluftbremseinrichtung nach Anspruch 10 oder 12, **dadurch gekennzeichnet, dass** dem Relaisventil (12) und dem wenigstens einen Bremsaktuator (3) wenigstens ein Gleitschutzventil (16, 18) zwischengeordnet ist.

14. Druckluftbremseinrichtung nach Anspruch 12 oder 13, **dadurch gekennzeichnet, dass** die indirekte elektro-pneumatische Bremse für Schnellbremsungen und die direkte elektro-pneumatische Bremse für Betriebsbremsungen vorgesehen ist.

## Claims

1. Method for detecting leaks in at least one brake pressure line (26, 28), under braking pressure (C), of a pneumatic brake device (1) of a rail vehicle comprising an indirect electro-pneumatic brake, which indirect electro-pneumatic brake has a main air reservoir line (HB) for carrying a main air reservoir line pressure and a compressed air source (7) supplying the main air reservoir line (HB) with compressed air and is controlled by the main air line pressure in a main air line (HL), the at least one brake pressure line (26, 28) which is under the braking pressure (C) extending between a valve device (12) which modulates the braking pressure (C) in dependence on the main air line pressure in the main air line (HL) and at least one brake actuator (3), and the method including a brake test carried out with the rail vehicle stationary and comprising at least the following steps:
a) checking whether the main air reservoir line pressure exceeds a predefined limit value when the replenishment of compressed air from the compressed air source (7) to the main air reservoir line (HB) is cut off and, if this is the case,
b) controlling the main air line pressure in the main air line (HL) so as to apply the at least one brake actuator (3),
**characterized in that,** in the course of the brake test at least the following further steps are carried out:
c) monitoring the main air reservoir line pressure to determine whether
c1) the value of the main air reservoir line pressure established after the application of the at least one brake actuator (3) deviates by more than a predefined difference from a predefined plausible value for the main air reservoir line pressure, and/or
c2) the pressure gradient of the main air reservoir line pressure exceeds a predefined pressure gradient in the interval between the start and the end of the application of the at least one brake actuator (3), and
d) if c1) and/or c2 applies, generating an error message that a leak is present in the at least one brake pressure line (26, 28).

2. Method according to Claim 1, **characterized in that** the brake test is carried out manually, in a user-guided manner or automatically, and during the brake test the main air line pressure in the main air line (HL) is controlled at least periodically so as to apply the at least one brake actuator (3) .

3. Method according to either of the preceding claims, **characterized in that** during the brake test an electro-pneumatic control of the main air line pressure in the main air line (HL) is shut off by means of a control valve arrangement (20) including a discharge solenoid valve and a brake solenoid valve.

4. Method according to any one of the preceding claims, **characterized in that** the brake test is a brake test according to the standard UIC 612-1, chapter 4.1.3.1.

5. Method according to any one of the preceding claims, **characterized in that** the error message is displayed on a display (44) and/or is stored in a diagnostic memory.

6. Pneumatic brake device (1) of a rail vehicle including an indirect electro-pneumatic brake according to any one of the preceding claims for carrying out the method according to any one of the preceding claims, **characterized by**
a) at least one device (34) for detecting the main air reservoir line pressure,
b) an evaluation device (42) which is configured such that it carries out at least the steps c) and d) of claim 1 in the course of a brake test carried out with the rail vehicle stationary,
c) at least one display (44) for displaying the error message or a diagnostic memory for storing the error message.

7. Pneumatic brake device according to Claim 6, **characterized in that** the device for detecting the main air reservoir line pressure includes at least one pressure sensor (34) arranged in the main air reservoir line (HB).

8. Pneumatic brake device according to Claim 6 or 7, **characterized in that** the evaluation device (42) is formed by an electronic control unit.

9. Pneumatic brake device according to any one of Claims 6 to 8, **characterized in that** the compressed air source (7) is formed by at least one compressor or a compressed air storage reservoir.

10. Pneumatic brake device according to any one of Claims 6 to 9, **characterized in that** the indirect electro-pneumatic brake further has an electro-pneumatic control of the main air line pressure in the main air line (HL), which control is carried out by a control valve arrangement (20) including a discharge solenoid valve and a brake solenoid valve, a control inlet (21) of a relay valve (32) being controlled by means of the main air line pressure controlled by the electro-pneumatic control valve arrangement (20), which relay valve (32) modulates the braking pressure (C) delivered via the at least one brake pressure line (26, 28) to the at least one brake actuator (3) in dependence on the controlled main air line pressure.

11. Pneumatic brake device according to Claim 10, **characterized in that** the at least one brake pressure line (26, 28) is formed by a brake pressure hose for supplying the at least one brake actuator (3) of an axle of a bogie having two axles with braking pressure (C).

12. Pneumatic brake device according to any one of Claims 6 to 9, **characterized in that** it further comprises a direct electro-pneumatic brake having an electro-pneumatic pressure regulator (8) which, with the aid of a brake solenoid valve (13) and a discharge solenoid valve (15), generates from the main air reservoir line pressure a pilot control pressure for a further control inlet (21) of the relay valve (32), which relay valve (32) modulates the braking pressure (C) delivered to the at least one brake actuator (3) in dependence on the pilot control pressure.

13. Pneumatic brake device according to Claim 10 or 12, **characterized in that** at least one anti-slip valve (16, 18) is arranged between the relay valve (12) and the at least one brake actuator (3).

14. Pneumatic brake device according to Claim 12 or 13, **characterized in that** the indirect electro-pneumatic brake is provided for rapid braking and the direct electro-pneumatic brake is provided for service braking.

## Revendications

1. Procédé de détection de fuites dans au moins un conduit (26, 28) de pression (C) de freinage d'un dispositif (1) de frein à air comprimé ayant un frein électropneumatique indirect d'un véhicule ferroviaire, le frein électropneumatique indirect ayant un conduit (HB) de réservoir d'air principal pour conduire une pression de conduit de réservoir d'air principal et une source (7) d'air comprimé alimentant en air comprimé le conduit (HB) de réservoir d'air principal, et étant commandé par la pression de conduite d'air principal dans un conduit (HL) d'air principal, le au moins un conduit (26, 28) conduisant la pression (C) de freinage étant guidé entre un dispositif (12) de vanne commandant la pression (C) de freinage en fonction de la pression dans le conduit (HL) d'air principal et au moins un actionneur (3) de frein, le procédé comprenant un essai de frein effectué alors que le véhicule ferroviaire est à l'arrêt, comprenant au moins les stades suivantes :
a) contrôle du point de savoir si, lors de la fourniture d'air comprimé par la source (7) d'air comprimé au conduit (HB) de réservoir d'air principal, la pression dans le conduit de réservoir d'air principal dépasse une valeur limite donnée à l'avance et, si c'est le cas,
b) commande de la pression dans le conduit (HL) d'air principal pour serrer le au moins un actionneur (3) de frein,
**caractérisé en ce que**, dans le cadre de l'essai de frein, on effectue au moins les autres stades suivantes :
c) contrôle de la pression dans le conduit du réservoir d'air principal pour savoir si :
c1) la valeur de la pression dans le conduit du réservoir d'air principal s'établissant après le serrage du au moins un actionneur (3) de frein s'écarte de plus d'une différence donnée à l'avance d'une valeur plausible donnée à l'avance de la pression dans le conduit de réservoir d'air principal, et/ou
c2) le gradient de la pression dans le conduit de réservoir d'air principal dépasse, dans le laps de temps du début à la fin du serrage du au moins un actionneur (3) de frein, un gradient de pression donné à l'avance, et
d) si c1) et/ou c2) est vérifié, production d'un message de défaut suivant lequel il y a une fuite dans le au moins un conduit (26, 28) de pression de freinage.

2. Procédé suivant la revendication 1, **caractérisé en ce que** l'essai de frein est effectué manuellement par l'utilisateur ou est effectué automatiquement, et pendant l'essai de frein, on commande la pression dans le conduit (HL) d'air principal, au moins de temps en temps, pour serrer le au moins un actionneur (3) de frein.

3. Procédé suivant l'une des revendications précédentes, **caractérisé en ce que**, pendant l'essai de frein, on supprime une commande électropneumatique de la pression dans le conduit (HL) d'air principal, au moyen d'un dispositif (20) de vanne de commande, comportant une électrovanne de desserrage et une électrovanne de frein.

4. Procédé suivant l'une des revendications précédentes, **caractérisé en ce que** l'essai de frein est un essai de frein suivant la norme UIC 612-1, Chapitre 4.1.3.1.

5. Procédé suivant l'une des revendications précédentes, **caractérisé en ce qu'**on affiche le message de défaut sur un affichage (44) et/ou on le mémorise dans une mémoire de diagnostic.

6. Dispositif (1) de frein à air comprimé d'un véhicule ferroviaire, comportant un frein électropneumatique indirect suivant l'une des revendications précédentes pour effectuer le procédé suivant l'une des revendications précédentes, **caractérisé par**
a) au moins un dispositif (34) de détection de la pression dans le conduit de réservoir d'air comprimé,
b) un dispositif (42) d'exploitation qui est constitué pour effectuer, dans le cadre d'un essai de frein effectué alors que le véhicule ferroviaire est à l'arrêt, au moins les stades c) et d) de la revendication 1,
c) au moins un affichage (44) pour afficher le message de défaut ou une mémoire de diagnostic pour mémoriser le message de défaut.

7. Procédé suivant la revendication 6, **caractérisé en ce que** le dispositif de détection de la pression dans le conduit de réservoir d'air principal comporte au moins un capteur (34) de pression, monté dans le conduit (HB) de réservoir d'air principal.

8. Procédé suivant la revendication 6 ou 7, **caractérisé en ce que** le dispositif (42) d'exploitation est formé par un appareil électronique de commande.

9. Procédé suivant l'une des revendications 6 à 8, **caractérisé en ce que** la source (7) d'air comprimé est formée par au moins un compresseur ou par un réservoir d'air comprimé.

10. Procédé suivant l'une des revendications 6 à 9, **caractérisé en ce que** le frein électropneumatique indirect a, en outre, une commande électropneumatique de la pression dans le conduit (HL) d'air principal qui s'effectue par un dispositif (20) de vanne de commande, comportant une électrovanne de desserrage et une électrovanne de freinage, dans lequel, au moyen de la pression dans le conduit d'air principal, commandé par le dispositif (20) de vanne de commande électropneumatique, a une entrée (21) de commande d'une vanne (32) relais est commandée, laquelle, en fonction de la pression commandée dans le conduit d'air principal, envoie la pression (C) de freinage par l'intermédiaire du au moins un conduit (26, 28) de pression de freinage au au moins un actionneur (3) de frein.

11. Procédé suivant la revendication 10, **caractérisé en ce que** le au moins un conduit (26, 28) de pression de freinage est formé par un conduit souple de pression de freinage pour l'alimentation du au moins un actionneur (3) de frein, d'un essieu d'un bogie ayant deux essieux en pression (C) de freinage.

12. Procédé suivant l'une des revendications 6 à 9, **caractérisé en ce qu'**il a, en outre, un frein électropneumatique direct ayant un régleur (8) de pression électromagnétique qui, à l'aide d'une électrovanne (13) de freinage et d'une électrovanne (15) de desserrage, produit, à partir de la pression dans le conduit de réservoir d'air principal, une pression pilote pour une autre entrée (21) de commande de la vanne (32) relais laquelle, en fonction de la pression pilote, envoie la pression (C) de freinage au au moins un actionneur (3) de frein.

13. Procédé suivant la revendication 10 ou 12, **caractérisé en ce que** au moins une vanne (16, 18) anti-glissement est disposée entre la vanne (12) relais et le au moins un actionneur (3) de frein.

14. Procédé suivant la revendication 12 ou 13, **caractérisé en ce que** le frein électropneumatique indirect est prévu pour des freinages rapides et le frein électropneumatique direct pour des freinages de service.
